# EUROPEAN PATENT SPECIFICATION

(11) **EP 3 594 680 B1**
(45) Date of publication and mention of the grant of the patent: **29.04.2026**
(21) Application number: 17900247.2
(22) Date of filing: 07.03.2017
(51) Int. Cl.: G01N 30/82, G01N 30/86

(54) **FRACTION COLLECTOR CONTROL DEVICE AND PREPARATIVE LIQUID CHROMATOGRAPH**
FRAKTIONSKOLLEKTORVORRICHTUNG UND PRÄPARATIVER FLÜSSIGCHROMATOGRAF
DISPOSITIF DE COMMANDE DE COLLECTEUR DE FRACTION ET CHROMATOGRAPHE EN PHASE LIQUIDE DE PRÉPARATION

(43) Date of publication of application: 15.01.2020
(73) Proprietor: Shimadzu Corporation, Kyoto-shi, Kyoto 604-8511 (JP)
(72) Inventor: TAMAOKI, Soichiro, Kyoto-shi, Kyoto 604-8511 (JP); OKOBA, Tsutomu, Kyoto-shi, Kyoto 604-8511 (JP); IRIKI, Takayuki, Kyoto-shi, Kyoto 604-8511 (JP); UEDA, Shiori, Kyoto-shi, Kyoto 604-8511 (JP)
(74) Representative: Müller-Boré & Partner Patentanwälte PartG mbB
(86) International application number: PCT/JP2017/008955
(87) International publication number: WO 2018/163275

(56) References cited:
- WO-A2-02/21099
- JP-A- 2002 005 914
- JP-A- 2014 211 393
- US-A- 5 670 054
- US-A1- 2009 199 620
- US-A1- 2016 018 370
- US-A1- 2016 290 976
- KIBBEY C E: "AUTOMATED SYSTEM FOR THE PURIFICATION OF COMBINATORIAL LIBRARIES BYPREPARATIVE LC/MS", LABORATORY ROBOTICS AND AUTOMATION, VCH PUBLISHERS, NEW YORK, US, vol. 9, no. 6, 1 January 1997 (1997-01-01), pages 309 - 321, XP000913652, ISSN: 0895-7533, DOI: 10.1002/(SICI)1098-2728(1997)9:6<309::AID-LRA5>3.0.CO;2-4
- "Principles in preparative HPLC", 1 April 2007, AGILENT TECHNOLOGIES, article UDO HUBER ET AL: "Principles in preparative HPLC", pages: 1 - 85, XP055236447

## Description

### TECHNICAL FIELD

The present invention relates to a fraction collector controller that controls operation of a fraction collector that separately collects components of a sample, based on signals from a detector of a liquid chromatograph, and relates to a preparative liquid chromatograph that includes the fraction collector controller.

### BACKGROUND ART

A preparative liquid chromatograph that includes a liquid chromatograph, such as a high-performance liquid chromatograph, and separates and collects a plurality of components of a sample is known (see Patent Document 1, for example). The preparative liquid chromatograph includes a chromatograph unit that includes a liquid delivering device that delivers a mobile phase, an analytical column, a detector, and the like, a fraction collector that is on a latter-stage side of the chromatograph unit, and a controller that controls the chromatograph unit and the fraction collector. The fraction collector is configured to operate based on signals from the detector of the chromatograph unit so that sample components separated by the analytical column are collected separately from each other by the fraction collector.

A threshold is used to detect a start point and an end point of a peak. The preparative liquid chromatograph allows a user to adjust the threshold to detect a desired peak. A controller that controls operation of the fraction collector is configured to use a threshold value set by a user, compare parameters (signal strength and inclination) of signals detected by the detector and retrieved from the detector at regular intervals, and thus, detect a start point or an end point of a peak. The controller controls operation of the fraction collector so that components of detected peaks are collected individually.

Components may overlap each other in some analytical conditions of the liquid chromatograph. Alternatively, components of some samples may overlap each other. Therefore, a plurality of analog signals may be retrieved from a plurality of detectors, such as an ultraviolet spectroscopy (UV) detector and a mass spectrometry (MS) detector, and strength of the analog signals may be compared while the components are fractioned. us 2016/0290976 A1 describes a preparative separation chromatograph including: a chromatograph having a detector; a fraction collector; a controller for commanding the fraction collector to initiate a component-collecting operation with reference to a point when the rate of change in an output signal from the detector exceeds a positive reference value and to discontinue the operation with reference to a point when the absolute value of the rate of change becomes smaller than that of a negative reference value after the rate of change turns negative; a storage section for storing sampling-rate information which relates the value of the output signal to the time interval at which the controller determines the rate of change; and a sampling rate determiner for determining the time interval for calculating the rate of change based on the sampling-rate information and actual values of the output signal. Udo Huber ET AL: "Principles in preparative HPLC" (published on 1 April 2007 by Agilent Technologies, pages 1-85) describes preparative HPLC which is associated with large columns and high flow rates and used for the isolation and purification of valuable products in the chemical and pharmaceutical industry as well as in biotechnology and biochemistry.

### PRIOR ART DOCUMENT

### PATENT DOCUMENT

Patent Document 1: JP 2002-005914 A

### SUMMARY OF THE INVENTION

### PROBLEMS TO BE SOLVED BY THE INVENTION

A preparative liquid chromatograph needs to fraction a plurality of high-purity components of a sample that is a mixture of the plurality of components. However, signals from a detector may include noise which may be recognized as a wrong peak, and a fraction collector malfunctions and separately collects an unnecessary component. Analog signals from a MS detector especially are likely to include noise due to a principle of detection. Therefore, the MS detector often causes malfunction of a fraction collector.

If a peak of a desired component overlaps a peak of foreign matter, the peak of the foreign matter is recognized as a wrong peak of the desired component, and fractioning is started. Consequently, an unnecessary component is separately collected, or purity of a fractioned component decreases.

A peak of a desired component may have a shape of a gentle curve. If a temporal change in signal exists in between of such a peak, a portion of the peak that includes the temporal change is recognized as a wrong end point of the peak. Consequently, a peak of one component is fractioned into a plurality of peaks.

These problems are not solved by only adjusting a threshold used for determination of detection of peaks. It is conventionally difficult for a user to deal with the problems.

The present invention is made in light of the aboveproblems. The present invention is defined in the appended claims. It is an object of the present invention to increase freedom of adjustment of conditions used for detection of peaks, and thus, to allow a user to deal with the problems. The present invention is defined by the independent claims. Preferred examples are defined in the dependent claims.

### SOLUTIONS TO THE PROBLEMS

For a conventional preparative liquid chromatograph, a number of points of data used for determination of detection of peaks is a prescribed value particular to the conventional preparative liquid chromatograph. The number is generally one or two. A point of data is a signal detected by a detector and retrieved from the detector at regular intervals (or the detected signal of which noise components are reduced by smoothing or the like). The present inventors find that noise is recognized as a wrong peak, or a wrong end point of a peak is recognized in between of a peak mainly because detection of a start point and an end point of a peak is determined based on such a small number of points of data.

On the other hand, if points of data for determination of detection of a peak are many, small peaks may become difficult to detect. Therefore, one prescribed large value is not used as a number of points of data for determination in all situations. Similarly as a threshold, an optimum value for a number of points of data used for determination of detection of a peak is determined based on a sample and analytical conditions of a liquid chromatograph. Therefore, preferably, the number of points of data used for determination of detection of a peak is appropriately adjusted.

A fraction collector controller according to an aspect of the present invention includes a threshold storing part, a peak detecting part, a number-of-points-of-data setting part, and a control part. The threshold storing part stores a signal strength threshold and/or an inclination threshold used for detection of a start point of the peak and a signal strength threshold and/or an inclination threshold used for detection of an end point of the peak. A peak detecting part is configured to retrieve, at regular intervals, signals that are from a detector of a liquid chromatograph and are used as points of data, and to detect a start point and an end point of a peak by comparing a signal strength and/or an inclination of each of the points of data with the thresholds stored by the threshold storing part. A number-of-points-of-data setting part is configured to set a number of the points of data for detecting the start point and the end point of the peak. A control part is configured to control operation of the fraction collector so that a part from the start point to the end point of the peak detected by the peak detecting part is collected. The peak detecting part is configured, when a number of a first successive points of data that each have a signal strength that is equal to or larger than the signal strength threshold used for detection of a start point of the peak and/or an inclination that is equal to or larger than the inclination threshold used for detection of a start point of the peak reaches the number set by the number-of-points-of-data setting part, to detect a start point of the peak by counting backward a number that is considered the number set by the number-of-points-of-data setting part from the final point of data of the first successive points of data. After the start point of the peak is detected, the peak detecting part is configured, when a number of a second successive points of data that each have a signal strength that is equal to or lower than the signal strength threshold used for detection of an end point of the peak and/or an inclination that is equal to or larger than the inclination threshold used for detection of an end point of the peak reaches the number set by the number-of-points-of-data setting part, to detect an end point of the peak by counting backward a number that is considered the number set by the number-of-points-of-data setting part from the final point of data of the second successive points of data.

The number-of-points-of-data setting part may be configured to automatically set a number of points of data used for determination of detection of a peak. Alternatively, the number-of-points-of-data setting part may be configured to require a user to set any number. A user generally sets a threshold(s) used for detection of a peak. Based on a chromatogram created by preliminarily and tentatively analyzing a sample a user intends to analyze, the user sets a threshold(s) that enable(s) to detect all peaks desired by the user. If a number of points of data used for determination of detection of a peak is set at a time of setting such a threshold(s), the number of points of data used for determination of detection of a peak is adjusted to an optimum value, according to a sample and analytical conditions.

A preparative liquid chromatograph according to an aspect of the present invention includes: a liquid delivering device for delivering a mobile phase; an analytical flow path through which a mobile phase delivered by the liquid delivering device flows; a sample injector configured for injecting a sample into the analytical flow path; an analytical column that is on the analytical flow path downstream of the sample injector, and separates components of the sample; a detector for detecting the components of the sample separated by the analytical column at the analytical flow path downstream of the analytical column; a fraction collector for collecting the components of the sample flowed out from the detector at an outlet side of the detector; and the fraction collector controller according to another aspect of the present invention configured to control the fraction collector based on signals detected by the detector so that the components of the sample separated by the analytical column are collected individually.

### EFFECTS OF THE INVENTION

According to a fraction collector controller of the present invention, the controller includes a number-of-points-of-data setting part configured to set a number of points of data used for determination of detection of a start point and an end point of a peak. Therefore, not only thresholds, such as a signal strength and an inclination, are adjusted, but also the number of points of data compared with the thresholds are adjusted, and a freedom of adjustment of conditions for detection of a peak is improved. Consequently, malfunction of a fraction collector due to recognition of a wrong start point and a wrong end point of a peak decreases, and a peak is accurately detected.

According to a preparative liquid chromatograph of the present invention, the preparative liquid chromatograph includes the fraction collector controller described above. Therefore, improved freedom of setting of conditions for detection of a peak improves accuracy of detection of a peak, and accuracy of fractioning is high.

### BRIEF DESCRIPTION OF THE DRAWINGS

Fig. 1 is a flow-path configuration diagram that schematically illustrates a preparative liquid chromatograph according to an embodiment.
Fig. 2 is a block diagram that schematically illustrates a configuration of a controller according to the embodiment.
Fig. 3 is a flowchart that illustrates operation of setting a threshold used for detection of a peak according to the embodiment.
Fig. 4 is a chromatogram that illustrates an example of detection of a peak according to a conventional technique.
Fig. 5 is a chromatogram that illustrates an example of detection of a peak according to the embodiment.
Fig. 6 is a chromatogram that illustrates another example of detection of a peak according to a conventional technique.
Fig. 7 is a chromatogram that illustrates another example of detection of a peak according to the embodiment.
Fig. 8 is a chromatogram that illustrates another example of detection of a peak according to a conventional technique.
Fig. 9 is a chromatogram that illustrates another example of detection of a peak according to the embodiment.

### EMBODIMENT OF THE INVENTION

Hereinafter, a fraction collector controller and a preparative liquid chromatograph according to an embodiment of the present invention will be described with reference to the drawings.

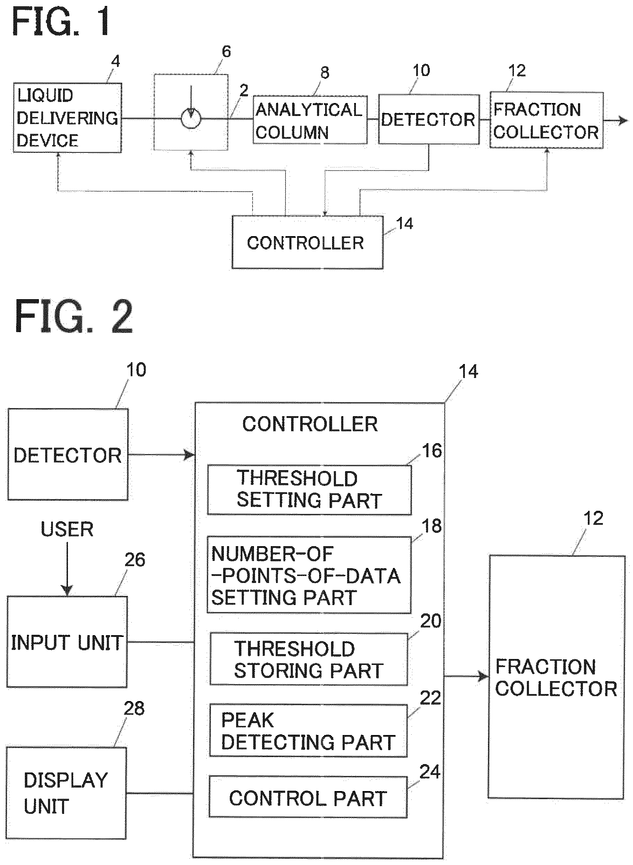

Fig. 1 schematically illustrates a configuration of a preparative liquid chromatograph.

The preparative liquid chromatograph includes a liquid delivering device 4 that delivers a mobile phase through an analytical flow path 2, a sample injector 6 that injects a sample into the analytical flow path 2, an analytical column 8 that separates components of the sample, a detector 10 that detects the components of the sample separated by the analytical column 8, a fraction collector 12 that separately collects the components of the sample separated by the analytical column 8, and a controller 14 that controls operation of the whole preparative liquid chromatograph.

The sample injector 6 is on the analytical flow path 2 downstream of the liquid delivering device 4. The sample injector 6 is an auto sampler configured to automatically collect a sample and inject the sample into the analytical flow path 2 through which a mobile phase delivered from the liquid delivering device 4 flows. The analytical column 8 is on the analytical flow path 2 downstream of the sample injector 6. The mobile phase delivered from the liquid delivering device 4 carries the sample injected by the sample injector 6 to the analytical column 8. The analytical column 8 separates the sample into individual components.

The detector 10 is on the analytical flow path 2 downstream of the analytical column 8, and components of the sample separated by the analytical column 8 appear as individual peaks in a waveform formed from signals of the detector 10. The fraction collector 12 is on a downstream of the detector 10. The controller 14 controls operation of the fraction collector 12.

The controller 14 functions as a fraction collector controller that controls operation of the fraction collector 12, based on signals from the detector 10. In addition to the control of operation of the fraction collector 12, the controller 14 is configured to control operation of the liquid delivering device 4, the sample injector 6, and a column oven (not illustrated) that regulates temperature of the analytical column 8. The controller 14 includes a computer that is exclusively for the preparative liquid chromatograph, or a general personal computer.

The fraction collector 12 may comprise any other structure that is configured to separately collect portions, which contain desired components respectively, of a mobile phase that flows out from the detector 10. For example, the fraction collector 12 may include a flow-path switching valve connected to a flow path from an outlet of the detector 10. The flow-path switching valve switches flow paths to deliver a mobile phase that contains desired components of a sample to respective containers. Alternatively, the fraction collector 12 may include a movable probe connected to a flow path from an outlet of the detector 10. The fraction collector 12 moves the movable probe to drop a mobile phase that contains desired components of a sample from an end of the movable probe into respective containers.

The controller 14 detects peaks, that are in a signal waveform formed from signals of the detector 10, correspond to desired components of a sample (selected by a user to be separately collected). The controller 14 controls operation of the fraction collector 12 so that parts of a mobile phase that corresponds to the peaks are collected individually. The controller 14 has predetermined determination conditions for detecting peaks, that correspond to desired components of a sample, in a signal waveform formed from signals of the detector 10. The determination conditions for detecting peaks are a threshold(s) used to detect a start point and an end point of a peak, and a number of points of data that are used for comparison with the threshold(s).

Functions of the controller 14 will be described with reference to a block diagram of Fig. 2.

The controller 14 includes a threshold setting part 16, a number-of-points-of-data setting part 18, a threshold storing part 20, a peak detecting part 22, and a control part 24. A control part 14 is electrically connected to an input unit 26 and a display unit 28. The input unit 26 includes, for example, a keyboard or a mouse and a user inputs information into the control part 14 by means of the input unit 26. The display unit 28 includes, for example, a liquid crystal display. For example, the display unit 28 displays various information, such as chromatograms created based on data on signals detected by the detector 10.

The threshold setting part 16 is configured to require a user to set a threshold(s). When a threshold(s) is/are set, the display unit 26 displays a chromatogram obtained in an analysis preliminarily and tentatively performed. Based on the chromatogram, the user sets a threshold(s) to a value(s) that enable(s) detection of all desired peak components. The threshold does/do not necessarily need to be set by a user, but may be set to an appropriate value(s) by the controller.

Parameters used for the thresholds are a strength (signal strength) and a change rate (inclination) of a signal retrieved from the detector 10 (or the signal of which noise components are reduced by smoothing or the like). The signal strength or the inclination may be used as a parameter for determination of detection of a peak (hereinafter referred to as the determination parameter(s)). Alternatively, both the signal strength and the inclination may be used as the determination parameters. A signal strength or an inclination, or both the signal strength and the inclination of a signal detected by the detector 10 is/are used as the determination parameter(s), based on a sample or analytical conditions (presence or absence of a drift, inclination, and the like). The threshold(s) that has/have been set is/are stored by the threshold storing part 20.

The number-of-points-of-data setting part 18 is configured to require a user to set a number of points of data used for determination of detection of a start point and an end point of a peak. The start point and the end point of a peak are detected by the peak detecting part 22 that will be described later. In addition to the function that requires a user to set any number of points of data, the number-of-points-of-data setting part 18 may have a function that allows the controller to set an appropriate number of points of data. The number of points of data used for determination of detection of a start point of a peak and the number of points of data used for determination of detection of an end point of a peak are not necessarily equal to each other, but may be separately set.

The peak detecting part 22 is configured to detect a start point and an end point of a peak, based on the threshold(s) and the number of points of data that are set as described above. That is, the peak detecting part 22 extracts a determination parameter from a signal (referred to as a point of data) detected by the detector 10 and retrieved from the detector 10, and/or calculates a determination parameter, based on the signal (referred to as the point of data) detected by the detector 10 and retrieved from the detector 10. Alternatively, the peak detecting part 22 extracts a determination parameter from the detected signal of which noise is reduced by smoothing or the like (referred to as a point of data), and/or calculates a determination parameter, based on the detected signal of which noise is reduced by smoothing or the like (referred to as the point of data). The peak detecting part 22 compares the determination parameter(s) of the point of data with respective threshold(s) to detect a start point and an end point of a peak.

"Extracting" a determination parameter means extracting a numerical value of a "signal strength". If a determination parameter is an inclination, "calculating" the determination parameter is calculating a change rate of signal strength, based on a signal strength of a point of data and a signal strength of another point of data retrieved immediately before the point of data.

Further, comparing a determination parameter of a point of data with a threshold means determining whether the determination parameter of the point of data exceeds the threshold. A determination parameter of a point of data "exceeding" a threshold does not mean only a level of a value. For example, an end point of a peak is detected based on a determination parameter "signal strength". In that case, if a signal strength of a signal retrieved from the detector 10 becomes equal to or lower than a threshold used for detection of an end point of a peak, the determination parameter "exceeds" the threshold.

The number-of-points-of-data setting part 18 has set the number of points of data. The points of data are used for determination of detection of a start point and an end point of a peak detected by the peak detecting part 22. That is, even if a determination parameter of a point of data exceeds a threshold, a start point and an end point of a peak are not detected. Only if a number of successive points of data that each have a determination parameter that exceeds a threshold reaches a set value, a start point and an end point of a peak are detected. For example, a determination parameter is "signal strength", and a number of points of data that is used for determination of a peak is set to "three". In that case, a start point and an end point of a peak are detected, only if there are three successive points of data that each have a signal strength that exceeds a threshold.

The control part 24 is configured to control the fraction collector 12 so that parts of a mobile phase that correspond to peaks detected by the peak detecting part 22 are collected individually.

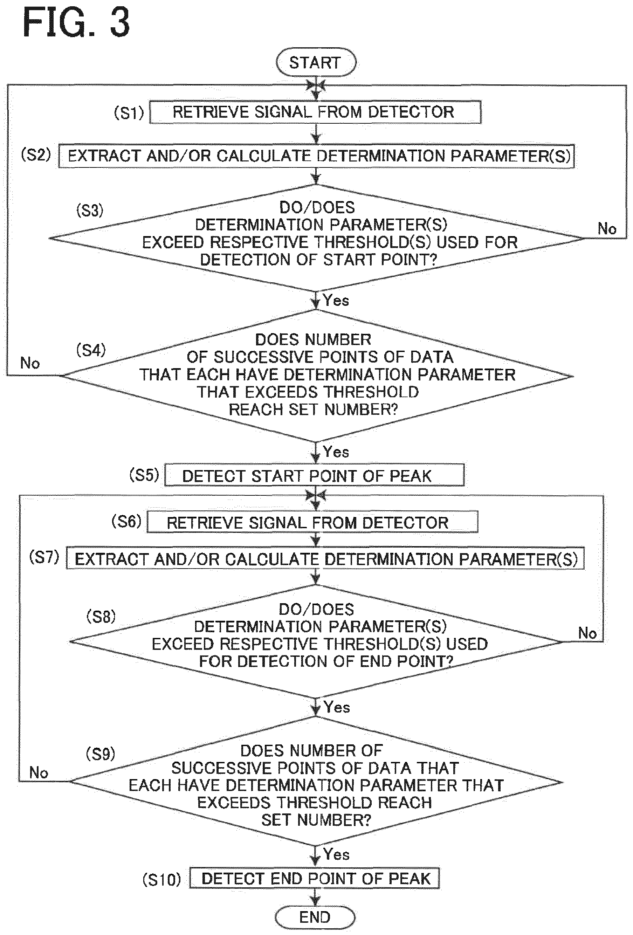

An example of a series of steps of detection of a peak according to the present embodiment will be described with reference to Fig. 2 and a flowchart of Fig. 3.

The controller 14 retrieves, at regular intervals, signals detected by the detector 10 (step S1). The controller 14 may process the retrieved signal. The controller 14 may smooth the retrieved signal. The control part 24 extracts a determination parameter (detected signal) from a retrieved signal, and/or calculates a determination parameter (inclination), based on the retrieved signal (step S2). Alternatively, the control part 24 extracts a determination parameter (detected signal) from a processed signal, e.g. a smoothed signal, and/or calculates a determination parameter (inclination), based on a processed signal, e.g. a smoothed signal (step S2). The control part 24 compares the determination parameter(s) with respective threshold(s) used for detection of a start point of a peak stored in the threshold storing part 20 (step S3). The steps are repeated until a point of data appears that has a determination parameter that exceeds the threshold.

If a determination parameter of a point of data exceeds the threshold, the control part 24 determines whether a number of successive points of data that each have a determination parameter that exceeds the threshold reaches a set number (step S4). If the number of successive points of data that each have a determination parameter that exceeds the threshold does not reach the set number, the same determination is performed for a next retrieved signal (a point of data). If the number of successive points of data that each have a determination parameter that exceeds the threshold reaches the set number, a start point of a peak is detected (step S5).

After the control part 24 detects the start point of a peak, the control part 24 uses a threshold for determination of an end point of a peak to detect an end point of the peak. Similarly as the detection of the start point of a peak, the control part 24 extracts a determination parameter from a signal retrieved from the detector 10, and/or calculates a determination parameter, based on the signal retrieved from the detector 10 (steps S6, S7). Further, the control part 24 compares the determination parameter(s) with respective threshold(s) used for detection of an end point of a peak (step S8). The steps are repeated until a point of data appears that has a determination parameter that exceeds the threshold.

If a determination parameter of a point of data exceeds the threshold, the control part 24 determines whether a number of successive points of data that each have a determination parameter that exceeds the threshold reaches a set number (step S9). If the number of successive points of data that each have a determination parameter that exceeds the threshold does not reach the set number, the same determination is performed for a next retrieved signal (a point of data). If the number of successive points of data that each have a determination parameter that exceeds the threshold reaches the set number, an end point of the peak is detected (step S10).

As described above, when the number of successive determination parameters that each exceed the threshold reaches the set number, a start point and an end point of a peak are detected. However, a point of data actually recognized as the start point of the peak and a point of data actually recognized as the end point of the peak are each not a point of data at a time when the number of successive determination parameters that each exceed the threshold reaches the set number. Instead, a point of data actually recognized as the start point of the peak and a point of data actually recognized as the end point of the peak are each a point of data calculated backward in light of the number of successive determination parameters. For example, a point of data recognized as a start point of a peak is a point of data that is a start point of successive points of data based on which the start point of a peak is detected. Similarly, a point of data recognized as an end point of a peak is a point of data that is immediately before a data point that is a start point of successive points of data based on which the end point of a peak is detected.

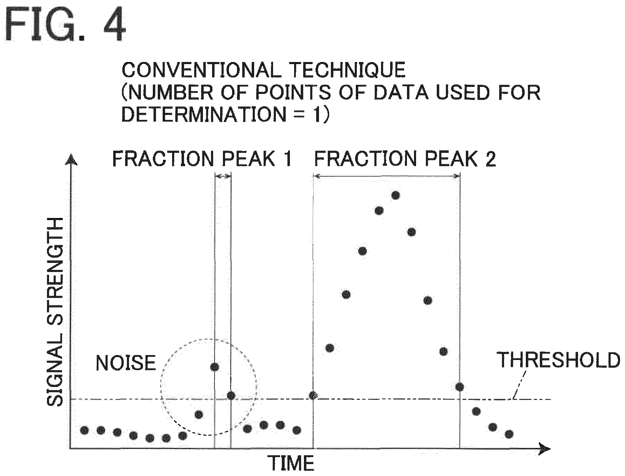

Fractioning performed in the embodiment described above will be illustrated and compared with fractioning performed in a conventional technique with reference to Figs. 4 to 9. In the following description, a number of points of data used for determination of detection of a peak is one in the conventional technique.

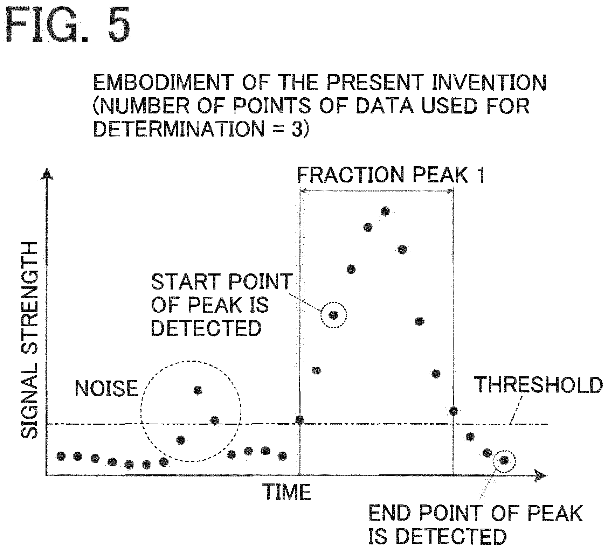

Fig. 4 illustrates a result of fractioning in a case where a conventional technique is used. Fig. 5 illustrates a result of fractioning in a case where a technique of the present embodiment is used. In both cases, a same sample is used. In the examples, a determination parameter used for detection of a peak is "signal strength". As illustrated in Fig. 4, since the number of points of data used for determination is one in the conventional technique, a noise signal that exceeds a threshold is detected as a start point of a peak, and thus a noise portion is collected as a fraction peak 1.

As illustrated in Fig. 5, according to a technique of the present embodiment in which the number of points of data used for determination is set to three, a number of successive noise signals that each exceed a threshold is fewer than three, and thus, a noise portion is not detected as a peak. Consequently, only a desired peak portion is collected individually as a fraction peak 1.

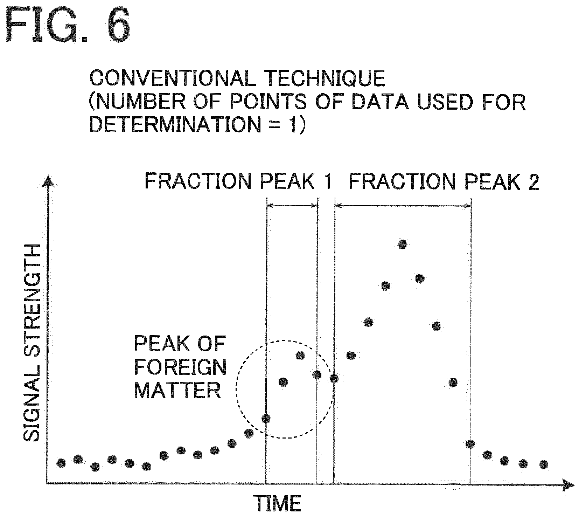

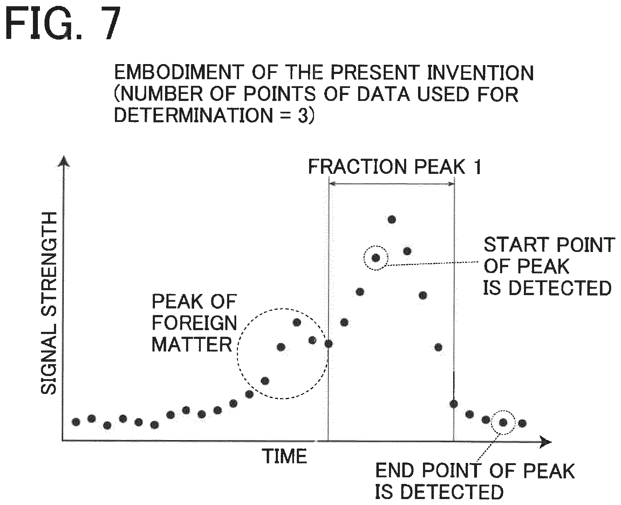

Fig. 6 illustrates a result of fractioning in a case where a conventional technique is used. Fig. 7 illustrates a result of fractioning in a case where a technique of the present embodiment is used. In both cases, the same sample is used. In the examples, a determination parameter used for detection of a peak is "inclination". In a signal waveform of each of Figs. 6 and 7, a peak of a desired component overlaps a peak of a foreign matter. If the sample has such a waveform, the conventional technique detects a peak of the foreign matter as a peak, as illustrated in Fig. 6, since a first inclination of points of data of the foreign matter exceeds a threshold. Consequently, the foreign matter is collected as a fraction peak 1.

On the contrary, according to the present embodiment in which the number of points of data used for determination is set to three, a foreign-matter portion is not detected as a peak, as illustrated in Fig. 7, since a peak of the foreign matter includes two successive points of data with an inclination each of which exceeds a threshold. Consequently, only a desired peak portion is detected as a fraction peak 1, and is collected individually.

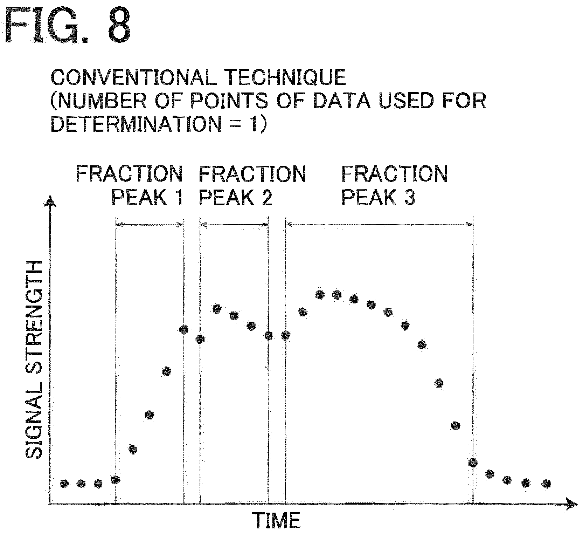

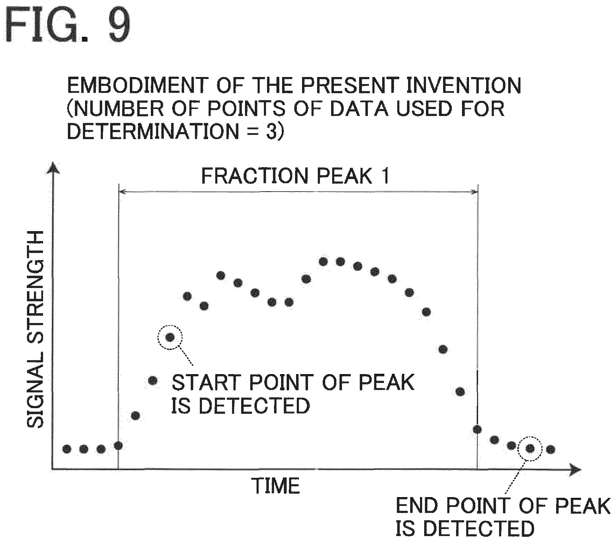

Fig. 8 illustrates a result of fractioning in a case where a conventional technique is used. Fig. 9 illustrates a result of fractioning in a case where a technique of the present embodiment is used. In both cases, the same sample is used. In the examples, a determination parameter used for detection of a peak is also "inclination". In a signal waveform in each of Figs. 6 and 7, a peak of a desired component has a shape of a gentle curve, and a portion of the peak includes a temporal change in polarity (positive and negative) of the inclination.

If the sample has such a waveform, the conventional technique detects a portion of the peak that includes the change in polarity of the inclination as a start point and an end point of a peak, as illustrated in Fig. 8. Consequently, the conventional technique detects three fraction peaks 1 to 3. Consequently, a peak of one component is divided into three wrong peaks, and the components of the three wrong peaks are separately collected.

On the contrary, according to the present embodiment in which the number of points of data used for determination is set to three, a number of successive points of data with an inclination each of which exceeds a threshold does not reach three in a portion of a peak that includes a change in polarity of an inclination. Therefore, the portion of a peak that includes a change in polarity of an inclination is not detected as a start point and an end point of a peak, as illustrated in Fig. 9 Consequently, a whole peak that has a shape of a gentle curve is detected as one peak component, and the component of the peak is collected individually.

### DESCRIPTION OF REFERENCE SIGNS

- 2:: analytical flow path
- 4:: liquid delivering device
- 6:: sample injector
- 8:: analytical column
- 10:: detector
- 12:: fraction collector
- 14:: controller
- 16:: threshold setting part
- 18:: number-of-points-of-data setting part
- 20:: threshold storing part
- 22:: peak detecting part
- 24:: control part
- 26:: input unit
- 28:: display unit

## Claims

1. A fraction collector controller for controlling a fraction collector connected to an outlet of a detector of a liquid chromatograph, comprising:
a threshold storing part that stores a signal strength threshold and/or an inclination threshold used for detection of a start point of the peak and a signal strength threshold and/or an inclination threshold used for detection of an end point of the peak;
a peak detecting part configured to retrieve, at regular intervals, signals that are from the detector of the liquid chromatograph and are used as points of data, and to detect a start point and an end point of a peak by comparing a signal strength and/or an inclination of each of the points of data with the thresholds stored by the threshold storing part;
a number-of-points-of-data setting part configured to set a number of the points of data for detecting the start point and the end point of the peak; and
a control part configured to control operation of the fraction collector so that a part from the start point to the end point of the peak detected by the peak detecting part is collected,
wherein
the peak detecting part is configured, when a number of a first successive points of data that each have a signal strength that is equal to or larger than the signal strength threshold used for detection of a start point of the peak and/or an inclination that is equal to or larger than the inclination threshold used for detection of a start point of the peak reaches the number set by the number-of-points-of-data setting part, to detect a start point of the peak by counting backward a number that is considered the number set by the number-of-points-of-data setting part from the final point of data of the first successive points of data, and
after the start point of the peak is detected, the peak detecting part is configured, when a number of a second successive points of data that each have a signal strength that is equal to or lower than the signal strength threshold used for detection of an end point of the peak and/or an inclination that is equal to or larger than the inclination threshold used for detection of an end point of the peak reaches the number set by the number-of-points-of-data setting part, to detect an end point of the peak by counting backward a number that is considered the number set by the number-of-points-of-data setting part from the final point of data of the second successive points of data.

2. The fraction collector controller according to claim 1, wherein the number-of-points-of-data setting part is configured to require a user to set any number.

3. A preparative liquid chromatograph, comprising:
a liquid delivering device for delivering a mobile phase;
an analytical flow path through which a mobile phase delivered by the liquid delivering device flows;
a sample injector configured for injecting a sample into the analytical flow path;
an analytical column for separating the sample into individual components on the analytical flow path downstream of the sample injector;
a detector for detecting the components of the sample separated by the analytical column at the analytical flow path downstream of the analytical column;
a fraction collector for collecting the components of the sample which flowed out from the detector at an outlet side of the detector; and
the fraction collector controller according to claim 1 or 2 configured to control the fraction collector based on signals detected by the detector so that the components of the sample separated by the analytical column are collected individually.

## Patentansprüche

1. Eine Fraktionssammler-Steuereinrichtung zum Steuern eines Fraktionssammlers, der mit einem Auslass eines Detektors eines Flüssigchromatographen verbunden ist, umfassend:
ein Schwellenwertspeicherteil, das einen Signalstärkenschwellenwert und/oder einen Steigungsschwellenwert speichert, die zur Detektion eines Startpunkts des Peaks verwendet werden, sowie einen Signalstärkenschwellenwert und/oder einen Steigungsschwellenwert, die zur Detektion eines Endpunkts des Peaks verwendet werden;
ein Peak-Detektionsteil, das konfiguriert ist, um in regelmäßigen Abständen Signale abzurufen, die vom Detektor des Flüssigchromatographen stammen und als Datenpunkte verwendet werden, und um einen Startpunkt und einen Endpunkt eines Peaks zu detektieren, indem er eine Signalstärke und/oder eine Steigung jedes der Datenpunkte mit den Schwellenwerten vergleicht, die vom Schwellenwertspeicherteil gespeichert sind;
ein Anzahl-von-Datenpunkten-Einstellteil, das konfiguriert ist, um eine Anzahl von Datenpunkten zum Detektieren des Startpunkts und des Endpunkts des Peaks einzustellen; und
ein Steuerteil, das konfiguriert ist, um den Betrieb des Fraktionssammlers derart zu steuern, dass ein Abschnitt vom Startpunkt bis zum Endpunkt des vom Peak-Erfassungsteil erfassten Peaks gesammelt wird,
wobei
das Peak-Detektionsteil konfiguriert ist, um, wenn eine Anzahl von ersten aufeinanderfolgenden Datenpunkten, die jeweils eine Signalstärke aufweisen, die gleich oder größer als der für die Detektion eines Startpunkts des Peaks verwendete Signalstärkenschwellenwert ist, und/oder eine Steigung, die gleich oder größer als der für die Detektion eines Startpunkts des Peaks verwendete Steigungsschwellenwert ist, die durch das Anzahl-von-Datenpunkten-Einstellteil eingestellte Anzahl erreicht, einen Startpunkt des Peaks zu erkennen, indem eine Zahl, die als die vom Anzahl-von-Datenpunkten-Einstellteil festgelegte Anzahl angesehen wird, vom Endpunkt der Daten der ersten aufeinanderfolgenden Datenpunkte aus rückwärts gezählt wird, und wobei
nachdem der Startpunkt des Peaks erkannt wurde, das Peak-Erkennungsteil konfiguriert ist, um, wenn eine Anzahl zweiter aufeinanderfolgender Datenpunkte, die jeweils eine Signalstärke aufweisen, die gleich oder kleiner als der für die Detektion eines Endpunkts des Peaks verwendete Signalstärkenschwellenwert ist, und/oder eine Steigung, die gleich oder größer als der für die Detektion eines Endpunkts des Peaks verwendete Steigungsschwellenwert ist, die durch das Anzahl-von-Datenpunkten-Einstellteil festgelegte Anzahl erreicht, einen Endpunkt des Peaks zu detektieren durch Rückwärtszählen einer Anzahl, die als die durch das Anzahl-von-Datenpunkten-Einstellteil festgelegte Anzahl angesehen wird, ausgehend vom Endpunkt der Daten der zweiten aufeinanderfolgenden Datenpunkte.

2. Die Fraktionssammler-Steuereinrichtung nach Anspruch 1, wobei das Anzahl-von-Datenpunkten-Einstellteil dazu konfiguriert ist, von einem Benutzer zu verlangen, eine beliebige Anzahl festzulegen.

3. Ein präparativer Flüssigchromatograph, umfassend:
eine Flüssigkeitszufuhrvorrichtung zum Zuführen einer mobilen Phase;
einen analytischen Strömungsweg, durch den eine von der Flüssigkeitszufuhrvorrichtung zugeführte mobile Phase strömt;
einen Probeninjektor, der dazu konfiguriert ist, eine Probe in den analytischen Strömungsweg zu injizieren;
eine analytische Säule zum Trennen der Probe in einzelne Komponenten auf dem analytischen Strömungsweg stromabwärts des Probeninjektors;
einen Detektor zum Detektieren der durch die analytische Säule getrennten Komponenten der Probe im analytischen Strömungsweg stromabwärts der analytischen Säule;
einen Fraktionssammler zum Sammeln der Komponenten der Probe, die aus dem Detektor an einer Auslassseite des Detektors herausgeflossen sind; und
die Fraktionssammler-Steuereinrichtung nach Anspruch 1 oder 2, die konfiguriert ist, um den Fraktionssammler auf der Grundlage der vom Detektor detektierten Signale derart zu steuern, dass die durch die analytische Säule getrennten Komponenten der Probe einzeln gesammelt werden.

## Revendications

1. Un dispositif de commande de collecteur de fractions destiné à commander un collecteur de fractions relié à une sortie d'un détecteur d'un chromatographe en phase liquide, comprenant :
une partie de mémorisation de seuils qui mémorise un seuil d'intensité de signal et/ou un seuil d'inclinaison utilisés pour la détection d'un point de début du pic, et un seuil d'intensité de signal et/ou un seuil d'inclinaison utilisés pour la détection d'un point de fin du pic ;
une partie de détection de pic configurée pour récupérer, à intervalles réguliers, des signaux provenant du détecteur du chromatographe en phase liquide et utilisés comme points de données, et pour détecter un point de début et un point de fin d'un pic en comparant une intensité de signal et/ou une inclinaison de chacun des points de données avec les seuils stockés par la partie de mémorisation de seuils ;
une partie de réglage du nombre de points de données configurée pour définir un nombre de points de données pour détecter le point de début et le point de fin du pic ; et
un dispositif de commande configuré pour commander le fonctionnement du collecteur de fractions de manière à ce qu'une partie (a *part)* allant du point de début au point de fin du pic détecté par la partie de détection de pic soit collectée,
sachant que
la partie de détection de pic est configurée, lorsqu'un nombre de premiers points de données successifs présentant chacun une intensité de signal égale ou supérieure au seuil d'intensité de signal utilisé pour la détection d'un point de début du pic et/ou une inclinaison égale ou supérieure au seuil d'inclinaison utilisé pour la détection d'un point de début du pic atteint le nombre défini par la partie de réglage du nombre de points de données, pour détecter un point de début du pic en comptant en arrière un nombre considéré comme le nombre défini par la partie de réglage du nombre de points de données à partir du point de données de fin des premiers points successifs, et
après que le point de début du pic a été détecté, la partie de détection de pic est configurée, lorsqu'un nombre de deuxièmes points de données successifs présentant chacun une intensité de signal égale ou inférieure au seuil d'intensité de signal utilisé pour la détection d'un point de fin du pic et/ou une inclinaison égale ou supérieure au seuil d'inclinaison utilisé pour la détection d'un point de fin du pic atteint le nombre défini par la partie de réglage du nombre de points de données, pour détecter un point de fin du pic en comptant en arrière un nombre considéré comme le nombre défini par la partie de réglage du nombre de points de données à partir du point de données de fin des deuxièmes points de données successifs.

2. Le dispositif de commande de collecteur de fractions d'après la revendication 1, sachant que la partie de réglage du nombre de points de données est configurée pour exiger d'un utilisateur qu'il définisse un nombre quelconque.

3. Un chromatographe en phase liquide préparatif, comprenant :
un dispositif d'acheminement de liquide destiné à acheminer une phase mobile ;
un trajet d'écoulement analytique à travers lequel s'écoule une phase mobile acheminée par le dispositif d'acheminement de liquide ;
un injecteur d'échantillon configuré pour injecter un échantillon dans le trajet d'écoulement analytique ;
une colonne analytique destinée à séparer l'échantillon en composants individuels sur le trajet d'écoulement analytique en aval de l'injecteur d'échantillon ;
un détecteur destiné à détecter les composants de l'échantillon séparés par la colonne analytique au niveau du trajet d'écoulement analytique en aval de la colonne analytique ;
un collecteur de fractions destiné à collecter les composants de l'échantillon qui se sont écoulés hors du détecteur au niveau d'une sortie du détecteur ; et
le dispositif de commande de collecteur de fractions d'après la revendication 1 ou 2
configuré pour commander le collecteur de fractions sur la base des signaux détectés par le détecteur de manière que les composants de l'échantillon séparés par la colonne analytique soient collectés individuellement.
